# EUROPÄISCHE PATENTSCHRIFT

(11) **EP 4 420 509 B1**
(45) Veröffentlichungstag und Bekanntmachung des Hinweises auf die Patenterteilung: **04.06.2025**
(21) Anmeldenummer: 24153327.2
(22) Anmeldetag: 23.01.2024
(51) Int. Cl.: A01F 15/12

(54) **LANDWIRTSCHAFTLICHE BALLENPRESSE**
AGRICULTURAL BALER
PRESSE À BALLES AGRICOLE

(30) Priorität: 27.02.2023 DE 102023104765
(43) Veröffentlichungstag der Anmeldung: 28.08.2024
(73) Patentinhaber: Maschinenfabrik Bernard Krone GmbH & Co. KG, 48480 Spelle (DE)
(72) Erfinder: KUHLS, THOMAS, 48607 Ochtrup (DE)

(56) Entgegenhaltungen:
- EP-A1- 1 707 045
- EP-A1- 3 384 759
- EP-A1- 3 735 820
- EP-B1- 2 407 024

## Beschreibung

Die Erfindung betrifft eine landwirtschaftliche Ballenpresse. Die Ballenpresse weist einen Pressenrahmen, eine Behältervorrichtung und eine Überführungseinrichtung auf. Die Überführungseinrichtung ist zur Überführung der Behältervorrichtung relativ zum Pressenrahmen ausgebildet. Die Behältervorrichtung ist von einer Betriebsstellung in eine Befüllstellung überführbar. Die Überführungseinrichtung weist zumindest einen Aktor auf. Außerdem weist die Überführungseinrichtung zumindest ein erstes Lenkerelement auf, das einenends schwenkbar um eine erste Lenkerrahmenschwenkachse am Pressenrahmen angeordnet und anderenends schwenkbar um eine erste Lenkerbehälterschwenkachse an der Behältervorrichtung angeordnet ist. Außerdem weist die Überführungseinrichtung eine Lenkeranordnung auf, die schwenkbar um eine zweite Lenkerbehälterschwenkachse an der Behältervorrichtung angeordnet ist. Die Lenkeranordnung umfasst zumindest ein zweites Lenkerelement, das einenends schwenkbar um eine zweite Lenkerrahmenschwenkachse am Pressenrahmen angeordnet ist.

Eine derartige Ballenpresse ist aus der EP 2 407 024 B1 bekannt. Die Überführungseinrichtung der bekannten Ballenpresse umfasst insgesamt vier Lenkerelemente, die jeweils vom Pressenrahmen bis zur Behältervorrichtung reichen, und einen Hydraulikzylinder, die jeweils um gesonderte Schwenkachsen schwenkbar am Pressenrahmen angeordnet sind. Dadurch hat die Überführungseinrichtung einen hohen Bauraumbedarf, durch den die Größe der Behältervorrichtung eingeschränkt ist. Aufgabe der vorliegenden Erfindung ist die Verbesserung der Ballenpresse derart, dass die Überführungseinrichtung bei Sicherstellung ihrer Zuverlässigkeit kompakt ausgeführt ist.

Erfindungsgemäß wird die Aufgabe durch die Merkmale des Anspruchs 1 gelöst. Vorteilhafte Weiterbildungen der Erfindung sind den Unteransprüchen zu entnehmen.

Erfindungsgemäß umfasst die Lenkeranordnung zumindest ein Zwischenlenkerelement und zumindest ein drittes Lenkerelement. Das zweite Lenkerelement ist einenends schwenkbar um die zweite Lenkerrahmenschwenkachse am Pressenrahmen angeordnet und anderenends schwenkbar um eine erste Zwischenlenkerschwenkachse an dem Zwischenlenkerelement angeordnet. Das Zwischenlenkerelement ist schwenkbar um eine zweite Zwischenlenkerschwenkachse am ersten Lenkerelement angeordnet. Das dritte Lenkerelement ist einenends schwenkbar um eine dritte Zwischenlenkerschwenkachse an dem Zwischenlenkerelement und anderenends schwenkbar um die zweite Behälterschwenkachse an der Behältervorrichtung angeordnet.

Bei der landwirtschaftlichen Ballenpresse handelt es sich insbesondere um eine Quaderballen- oder Großpackenpresse. Zur Fertigstellung eines gepressten Ballens umwickelt die Ballenpresse ihn üblicherweise mit einem Bindemittel wie beispielsweise einem Garn. Das dazu erforderliche Bindemittel wird von der Ballenpresse in Form von Bindemittelrollen mitgeführt. Die Behältervorrichtung dient insbesondere zur Aufnahme der mitzuführenden Bindemittelrollen. Hierzu bildet die Behältervorrichtung bevorzugt einen umschlossenen Innenraum mit einer Mehrzahl von Plätzen zur Positionierung jeweils einer Bindemittelrolle aus.

Die Behältervorrichtung bildet in der Betriebsstellung bevorzugt einer seitliche Flanke der Ballenpresse aus. Besonders bevorzugt weist die Ballenpresse zumindest zwei Behältervorrichtungen auf, die bezogen auf eine Längsmittelebene der Ballenpresse spiegelsymmetrisch angebracht sind. Im Betrieb der Ballenpresse befindet sich die zumindest eine Behältervorrichtung insbesondere zur Bereitstellung des beinhalteten Bindemittels in der Betriebsstellung. In der Betriebsstellung ist die Behältervorrichtung vorzugsweise zumindest teilweise oberhalb eines Rades der Ballenpresse positioniert, dass zum Abrollen auf einer Aufstandsebene ausgebildet ist, die im Betrieb insbesondere der Oberfläche des überfahrenden Ackers entspricht. Zum Nachfüllen der Behältervorrichtung, insbesondere zum Nachlegen von Bindemittelrollen, ist die Behältervorrichtung in die Befüllstellung zu überführen. In der Befüllstellung ist die Behältervorrichtung der Aufstandsebene näher als in der Betriebsstellung und befindet sich insbesondere seitlich versetzt zum Rad, damit der Betreiber der Ballenpresse bequem Zugriff auf die Behältervorrichtung hat.

Der Pressenrahmen ist insbesondere ein starres Gerüst, an dem sich unterschiedliche Funktionseinheiten der Ballenpresse abstützen. Das erste Lenkerelement und das zweite Lenkerelement sind bevorzugt mittels Schwenklagern am Pressenrahmen gelagert. Auch die weiteren zueinander schwenkbaren Bauteile sind bevorzugt mittels Schwenklagern aneinander gelagert. Die Schwenkachsen sind als geometrische Achsen zu verstehen, die sich vorzugsweise parallel zueinander und/oder in die Fahrtrichtung der Ballenpresse erstrecken. Bei den Lenkerelementen handelt es sich bevorzugt um starre und besonders bevorzugt zumindest im Wesentlichen längliche Bauteile. Der Aktor ist insbesondere als Hydraulikzylinder ausgebildet. Über die Schwenkbarkeit der vorgenannten Bauteile hinaus sind diese bevorzugt nicht relativ zueinander beweglich.

Durch die erfindungsgemäße Ausbildung der Lenkeranordnung ist die Überführungseinrichtung insbesondere als Z-Kinematik ausgebildet. Im Einzelnen ist die Lenkeranordnung bevorzugt derart ausgebildet, dass das zweite Lenkerelement, das Zwischenlenkerelement und/oder das dritte Lenkerelement das erste Lenkerelement in einer Front- oder Heckansicht zumindest in der Betriebsstellung, der Befüllstellung oder einer Zwischenstellung, in der die Behältervorrichtung während der Überführung zwischen der Betriebsstellung und der Befüllstellung angeordnet ist, kreuzen/kreuzt. Die erste Zwischenlenkerschwenkachse ist bevorzugt einenends des Zwischenlenkerelementes positioniert. Die dritte Zwischenlenkerschwenkachse ist bevorzugt anderenends des Zwischenlenkerelementes positioniert.

Durch die erfindungsgemäße Ausbildung der Ballenpresse lässt sich eine zuverlässige Führung der Behältervorrichtung relativ zum Pressenrahmen erreichen, durch die die Behältervorrichtung in der Befüllstellung zumindest im Wesentlichen gleich orientiert ist wie in der Betriebsstellung. Gegenüber der aus dem Stand der Technik bekannten Lenkeranordnung baut die Z-Kinematik jedoch besonders kompakt. Dadurch wird mehr Raum für die weiteren Funktionseinheiten der Ballenpresse und die Behältervorrichtung geschaffen. Aufgrund des größeren für die Behältervorrichtung zur Verfügung stehenden Raumes kann von der Ballenpresse ein größerer Vorrat an Bindemittel mitgeführt werden, wodurch die zur Befüllung der Behältervorrichtung notwendigen Standzeiten der Ballenpresse reduziert sind.

Der Aktor ist bevorzugt, insbesondere einenends, schwenkbar um eine Aktorrahmenschwenkachse am Pressenrahmen angeordnet. Alternativ ließe sich der Aktor bspw. schwenkbar an der Behältervorrichtung oder zwischen zwei der Lenkerelemente anordnen. Durch die Anordnung des Aktors am Pressenrahmen wird dessen Energieversorgung vereinfacht und so die Zuverlässigkeit der Überführungseinrichtung erhöht.

Besonders bevorzugt ist die Lenkeranordnung derart ausgebildet, dass die Aktorrahmenschwenkachse koaxial mit der zweiten Lenkerrahmenschwenkachse angeordnet ist. Das bedeutet, dass der Aktor und das zweite Lenkerelement um dieselbe Achse schwenkbar am Pressenrahmen gelagert sind. Insbesondere sind diese Achse und die erste Lenkerrahmenschwenkachse die einzigen Achsen, um die die Bauteile der Überführungseinrichtung schwenkbar am Pressenrahmen gelagert sind. Durch die koaxiale Anordnung der Aktorrahmenschwenkachse und der zweiten Lenkerrahmenschwenkachse ist der Bauraumbedarf der Überführungseinrichtung deutlich verringert und kann der Pressenrahmen in Bezug auf die Überführungseinrichtung konstruktiv einfacher ausgebildet sein.

Die erste Lenkerrahmenschwenkachse und die zweite Lenkerrahmenschwenkachse sind in einer ersten Ebene angeordnet. Vorzugsweise ist die Lenkeranordnung derart ausgebildet, dass die erste Ebene um mindestens 45°, bevorzugt um mindestens 55°, besonders bevorzugt um mindestens 65° zur Aufstandsebene angewinkelt ist. Dadurch lässt sich insbesondere bei Zusammenfallen der Aktorrahmenschwenkachse und der zweiten Lenkerrahmenschwenkachse gewährleisten, dass der Aktor selbst bei einer relativ kleinen unmittelbar auszuübenden Kraft ausreichend stark ist, um die Behältervorrichtung aus der Befüllstellung anzuheben, wobei das Verhältnis eines Schwenkwinkels des ersten Lenkerelementes zu einem in eine vertikale Richtung zurückgelegten Weg der Behältervorrichtung besonders klein ist. Die erste Ebene ist insbesondere um weniger als 90° zur Aufstandsebene angewinkelt. Dadurch kann der Aktor im Falle eines Zusammenfallens der Aktorrahmenschwenkachse und der zweiten Lenkerrahmenschwenkachse die Behältervorrichtung aus der Betriebsstellung entfernen, auch wenn die erste Lenkerrahmenschwenkachse und die erste Lenkerbehälterschwenkachse in der Betriebsstellung der Behältervorrichtung in einer zur Aufstandsebene rechtwinkligen Ebene liegen, wodurch ein weiterhin verringerter Bauraumbedarf der Überführungseinrichtung insbesondere in der Betriebsstellung der Behältervorrichtung erreicht ist.

Im Bereich der ersten Lenkerrahmenschwenkachse hat der Pressenrahmen insbesondere seine maximale Breite, wobei die zweite Lenkerrahmenschwenkachse näher an der Längsmittelebene liegt als die erste Lenkerrahmenschwenkachse. Die erste Lenkerrahmenschwenkachse ist insbesondere oberhalb des Rades der Ballenpresse angeordnet. Der Abstand der ersten Lenkerrahmenschwenkachse von der Längsmittelebene ist insbesondere um 60 mm größer als der Abstand der zweiten Lenkerrahmenschwenkachse von der Längsmittelebene, wobei der Abstand der zweiten Lenkerrahmenschwenkachse von der Aufstandsebene insbesondere um 150 mm größer ist als der Abstand der ersten Lenkerrahmenschwenkachse von der Aufstandsebene. Der unmittelbare Abstand der Lenkerrahmenschwenkachsen voneinander ist vorzugsweise kleiner als der Abstand der ersten Lenkerrahmenschwenkachse von der zweiten Zwischenlenkerschwenkachse und/oder der zweiten Lenkerrahmenschwenkachse von der ersten Zwischenlenkerschwenkachse. Hierdurch lässt sich auch bei dem geringen Bauraumbedarf eine relativ weite Beabstandung der Behältervorrichtung in der Befüllstellung vom Pressenrahmen erreichen.

Vorzugsweise ist der Aktor, insbesondere anderenends, schwenkbar um eine Aktorlenkerschwenkachse am ersten Lenkerelement angeordnet. Alternativ könnte der Aktor an einem der weiteren Lenkerelemente oder an der Behältervorrichtung angeordnet sein. Durch die Anordnung des Aktors am ersten Lenkerelement lässt sich insbesondere bei der vorbeschriebenen Positionierung der Lenkerrahmenschwenkachsen zueinander eine große Verschwenkung des ersten Lenkerelementes bereits bei einem geringen Fahrweg des Aktors erreichen.

Besonders bevorzugt ist die Lenkeranordnung derart ausgebildet, dass die Aktorlenkerschwenkachse koaxial mit der zweiten Zwischenlenkerschwenkachse angeordnet ist. Das bedeutet, dass der Aktor und das Zwischenlenkerelement um dieselbe Achse schwenkbar relativ zum ersten Lenkerelement angeordnet sind. Durch die Zusammenlegung der Aktorlenkerschwenkachse und der zweiten Zwischenlenkerschwenkachse baut die Überführungseinrichtung besonders kompakt.

Vorzugsweise ist die Lenkeranordnung derart ausgebildet, dass ein Abstand zwischen der zweiten Zwischenlenkerschwenkachse und der ersten Lenkerrahmenschwenkachse größer ist, als ein Abstand zwischen der zweiten Zwischenlenkerschwenkachse und der ersten Lenkerbehälterschwenkachse. Die zweite Zwischenlenkerschwenkachse ist vorzugsweise leicht außermittig an dem ersten Lenkerelement angeordnet. Durch diese Anordnung ist im Falle eines üblichen Hydraulikzylinders als Aktor ein größerer Schwenkwinkel des ersten Lenkerelementes relativ zum Pressenrahmen zu erreichen. Außerdem ist durch die Anordnung zu erreichen, dass bei einer Ausbildung der Behältervorrichtung zur Aufnahme gängiger Bindemittelrollen die Aufnahmekapazität durch das insbesondere in der Betriebsstellung der Behältervorrichtung teilweise von dem ersten Lenkerelement zur Behältervorrichtung ragende Zwischenlenkerelement geringstmöglich eingeschränkt wird.

Bevorzugt weist die Behältervorrichtung eine Ausnehmung auf, in die das Zwischenlenkerelement in der Betriebsstellung der Behältervorrichtung derart hineinragt, dass die erste Zwischenlenkerschwenkachse die Behältervorrichtung schneidet. Die Größe der Ausnehmung gleicht insbesondere der Größe eines der Bindemittelrollenplätze innerhalb der Behältervorrichtung. Die Ausnehmung ist insbesondere derart angeordnet, dass in Richtung der ersten Zwischenlenkerschwenkachse versetzt zur Ausnehmung beidseitig jeweils zumindest vier Bindemittelrollenplätze ausgebildet werden. Die Ausnehmung erlaubt einen geringeren Abstand zwischen der Behältervorrichtung in der Betriebsstellung und der Längsmittelebene der Ballenpresse, wodurch die rechtwinklig zur Längsmittelebene gemessene Breite der Behältervorrichtung und damit ihre Aufnahmekapazität größer werden können.

Vorzugsweise ist das Zwischenlenkerelement derart ausgebildet, dass ein Abstand zwischen der ersten Zwischenlenkerschwenkachse und der zweiten Zwischenlenkerschwenkachse kleiner ist als ein Abstand zwischen der zweiten Zwischenlenkerschwenkachse und der dritten Zwischenlenkerschwenkachse. Hierdurch lässt sich insbesondere der Bauraumbedarf in Richtung der Behältervorrichtung und damit ggf. die notwendige Quererstreckung der Ausnehmung verringern.

Die Lenkeranordnung ist bevorzugt derart ausgebildet, dass die Behältervorrichtung bei ihrer Überführung relativ zum Pressenrahmen zumindest geringfügig verschwenkt wird. Insbesondere verschwenkt ein unteres Ende der Behältervorrichtung bei ihrer Überführung von der Betriebsstellung in die Befüllstellung von dem Pressenrahmen weg, optimalerweise um einen Winkel von 7,3°. Diese Verschwenkung lässt sich zumindest teilweise durch die unterschiedlichen Abstände der ersten Zwischenlenkerschwenkachse und der dritten Zwischenlenkerschwenkachse von der zweiten Zwischenlenkerschwenkachse erreichen. Die Verschwenkung erleichtert die Führung des unteren Endes der Behältervorrichtung neben das in der Betriebsstellung insbesondere darunterliegende Rad, sodass die Behältervorrichtung vergrößert werden kann, ohne bei der Überführung mit dem Rad zu kollidieren.

Die erste Zwischenlenkerschwenkachse und die dritte Zwischenlenkerschwenkachse sind in einer zweiten Ebene angeordnet. Das Zwischenlenkerelement ist vorzugsweise derart ausgebildet, dass die zweite Zwischenlenkerschwenkachse zumindest in einer Stellung der Behältervorrichtung, insbesondere der Betriebsstellung, der Befüllstellung oder der Zwischenstellung, zu der zweiten Ebene in eine erste Richtung versetzt angeordnet ist, in die auch die zweite Lenkerrahmenschwenkachse zu der zweiten Ebene versetzt angeordnet ist.

Insbesondere weist das Zwischenlenkerelement zwei von der zweiten Zwischenlenkerschwenkachse ausgehende Schenkel auf, die hinsichtlich der Zwischenlenkerschwenkachsen derart von der zweiten Lenkerrahmenschwenkachse abgewandt ausgebildet sind, dass sie einen Winkel von weniger als 180° einschließen. Die erste Zwischenlenkerschwenkachse ist hierdurch in der Betriebsstellung besonders nah am ersten Lenkerelement zu positionieren. Zum einen ist hierdurch wiederrum der kritische Bauraumbedarf verringert. Zum anderen lässt sich hierdurch erreichen, dass die Behältervorrichtung bereits im ersten Teil der Überführung aus der Betriebsstellung erheblich gegenüber dem Pressenrahmen verschwenkt wird, um dem Rad besonders weit ausweichen zu können.

Das erste Lenkerelement ist vorzugsweise derart ausgebildet, dass es einer Länge von zumindest 80 %, bevorzugt zumindest 90 %, besonders bevorzugt zumindest 100 % einer Höhe der Behältervorrichtung in seiner Betriebsstellung entspricht. Insbesondere entspricht ein Abstand der ersten Lenkerrahmenschwenkachse von der ersten Lenkerbehälterschwenkachse zumindest 80 %, bevorzugt zumindest 90 % der Höhe. Das erste Lenkerelement erstreckt sich in der Betriebsstellung der Behältervorrichtung bevorzugt zumindest im Wesentlichen rechtwinklig zur Aufstandsebene länglich. Die möglichst große Länge des ersten Lenkerelementes und der möglichst große Achsenabstand bewirken eine besonders weite Beabstandung der Behältervorrichtung in der Befüllstellung von dem Pressenrahmen. Dadurch ist der Zugriff auf die Behältervorrichtung leichter möglich. Besonders bevorzugt entspricht die Länge des ersten Lenkerelementes der Höhe der Behältervorrichtung in der Betriebsstellung, da so im Falle des Vorhandenseins einer Wartungsplattform einer Ballenpresse oberhalb der Behältervorrichtung in der Betriebsstellung der Zwischenraum der Wartungsplattform und dem Rad optimal ausgenutzt wird.

Das erste Lenkerelement ist bevorzugt an einem oberen Ende der Behältervorrichtung gelagert. Die erste Lenkerbehälterschwenkachse ist in der Betriebsstellung der Behältervorrichtung in einer zur Aufstandsebene rechtwinkligen dritten Ebene angeordnet. Bevorzugt ist die Lenkeranordnung derart ausgebildet, dass die zweite Lenkerbehälterschwenkachse, die erste Lenkerrahmenschwenkachse und/oder die zweite Zwischenlenkerschwenkachse in der Betriebsstellung der Behältervorrichtung ebenso in der dritten Ebene angeordnet sind/ist. Dadurch lässt sich der Bauraumbedarf der Überführungseinrichtung insbesondere quer zur Längsmittelebene weiter verringern.

Vorzugsweise ist die Lenkeranordnung derart ausgebildet, dass ein Abstand zwischen der ersten Lenkerbehälterschwenkachse und der zweiten Lenkerbehälterschwenkachse höchstens 50 %, bevorzugt höchstens 40 %, besonders bevorzugt höchstens 30 % eines Abstandes zwischen der ersten Lenkerbehälterschwenkachse und der ersten Lenkerrahmenschwenkachse beträgt. Das bedeutet insbesondere, dass die zweite Lenkerbehälterschwenkachse nur relativ geringfügig vom oberen Ende der Behältervorrichtung beabstandet ist. Dadurch lässt sich zum einen erreichen, dass die Behältervorrichtung besonders nah an die Aufstandsebene zu führen ist, ohne dass die Überführungseinrichtung mit dem Rad kollidiert. Außerdem lassen sich durch einen geringen Abstand der Lenkerbehälterschwenkachsen voneinander die Abstände der Zwischenlenkerschwenkachsen voneinander verringern, was zu einem Bauraumvorteil führt, ohne die beabsichtigte Bewegung der Behältervorrichtung relativ zum Pressenrahmen zu gefährden.

Vorzugsweise weist die Überführungseinrichtung zwei erste Lenkerelemente auf, die in Richtung der Schwenkachsen voneinander beabstandet sind. Die Überführungseinrichtung weist bevorzugt genau einen Aktor auf, der zumindest in der Betriebsstellung der Behältervorrichtung zumindest teilweise, vorzugsweise mittig, zwischen den ersten Lenkerelementen angeordnet ist. Das gleiche gilt bevorzugt für das zweite Lenkerelement, das Zwischenlenkerelement und/oder das dritte Lenkerelement. Besonders bevorzugt ist die Überführungseinrichtung spiegelsymmetrisch zu einer Spiegelebene ausgebildet, die sowohl zur Aufstandsebene als auch zur Längsmittelebene rechtwinklig positioniert ist. Das weite Lenkerelement und/oder das Zwischenlenkerelement weisen/weist bevorzugt zwei gleichartig ausgebildete Abschnitte auf, zwischen denen zumindest ein Teil des Aktors angeordnet ist. An beiden ersten Lenkerelementen ist insbesondere je ein sich bogenförmig zum Zwischenlenkerelement erstreckendes Versteifungselement ortsfest angeordnet. Benachbart zur ersten Lenkerbehälterschwenkachse sind die ersten Lenkerelemente bevorzugt durch einen sich parallel zur ersten Lenkerbehälterschwenkachse erstreckenden Versteifungsholm miteinander verbunden.

Bevorzugt weisen/weist das zweite Lenkerelement und/oder das dritte Lenkerelement einen weiteren Aktor auf. Hierdurch sind/ist der Abstand der zweiten Lenkerrahmenschwenkachse zur ersten Zwischenlenkerschwenkachse und/oder der Abstand der dritten Zwischenlenkerschwenkachse zur zweiten Lenkerbehälterschwenkachse variabel. Der weitere Aktor ist bevorzugt unabhängig vom erstgenannten Aktor ansteuerbar. Hierdurch ist ein weiterer Freiheitsgrad der Überführungseinrichtung zu erreichen und kann bspw. die Behältervorrichtung aus der Betriebsstellung zunächst einzig um die erste Lenkerbehälterschwenkachse aufgeschwenkt werden, bevor sie in die Befüllstellung auf die Aufstandsebene zubewegt wird. Alternativ oder zusätzlich sind/ist das zweite Lenkerelement und/oder das dritte Lenkerelement manuell längenveränderlich, um die Überführungseinrichtung vor Inbetriebnahme der Ballenpresse einzustellen.

Weitere Einzelheiten und Vorteile der Erfindung sind dem nachfolgend beschriebenen, schematisch dargestellten Ausführungsbeispiel zu entnehmen; es zeigen:
- Fig. 1: eine erfindungsgemäße landwirtschaftliche Ballenpresse in einer teilweise geschnittenen Vorderansicht;
- Fig. 2a: eine Überführungseinrichtung der Ballenpresse gem. Fig. 1 in einer Betriebsstellung in einer Vorderansicht;
- Fig. 2b: die Überführungseinrichtung der Ballenpresse gem. Fig. 1 in einer Zwischenstellung in einer Vorderansicht;
- Fig. 2c: die Überführungseinrichtung der Ballenpresse gem. Fig. 1 in einer Befüllstellung in einer Vorderansicht;
- Fig. 3a: die Überführungseinrichtung der Ballenpresse gem. Fig. 1 in der Betriebsstellung in einer perspektivischen Ansicht;
- Fig. 3b: die Überführungseinrichtung der Ballenpresse gem. Fig. 1 in der Zwischenstellung in einer perspektivischen Ansicht;
- Fig. 3c: die Überführungseinrichtung der Ballenpresse gem. Fig. 1 in der Befüllstellung in einer perspektivischen Ansicht;
- Fig. 4a: die Überführungseinrichtung der Ballenpresse gem. Fig. 1 in der Betriebsstellung in einer Draufsicht;
- Fig. 4b: die Überführungseinrichtung der Ballenpresse gem. Fig. 1 in der Zwischenstellung in einer Draufsicht;
- Fig. 4c: die Überführungseinrichtung der Ballenpresse gem. Fig. 1 in der Befüllstellung in einer Draufsicht;
- Fig. 5: die Überführungseinrichtung der Ballenpresse gem. Fig. 1 in der Zwischenstellung in einer vereinfachten Vorderansicht.

Die nachfolgend erläuterten Merkmale des erfindungsgemäßen Ausführungsbeispiels können auch einzeln oder in anderen Kombinationen als dargestellt oder beschrieben Gegenstand der Erfindung sein, stets aber zumindest in Kombination mit den Merkmalen des Anspruchs 1. Sofern sinnvoll, sind funktional gleichwirkende Teile mit identischen Bezugsziffern versehen.

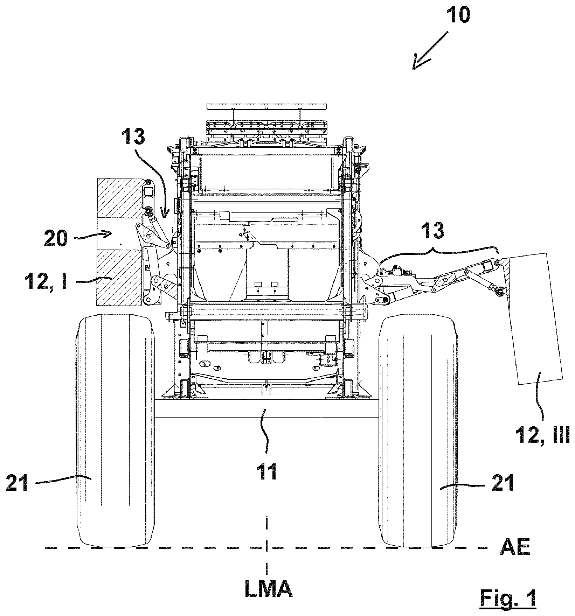

Die Figuren zeigen eine erfindungsgemäße landwirtschaftliche Ballenpresse 10 ganz oder teilweise. Figur 1 zeigt die Ballenpresse 10 als Ganzes. Die Ballenpresse 10 weist einen Pressenrahmen 11 einschließlich einer Radachse und daran angeordneter Räder 21 auf. Mit den Rändern 21 steht die Ballenpresse 10 auf einer Aufstandsebene AE auf. Oberhalb des in Figur 1 links dargestellten Rades 21 ist eine Behältervorrichtung 12 in einer Betriebsstellung I dargestellt. Neben dem in Figur 1 rechts dargestellten Rad 21 ist eine weitere Behältervorrichtung 12 in einer Befüllstellung III dargestellt. Die beiden Behältervorrichtungen 12 sind mittels gleichartiger Überführungseinrichtungen 13 am Pressenrahmen 11 angeordnet.

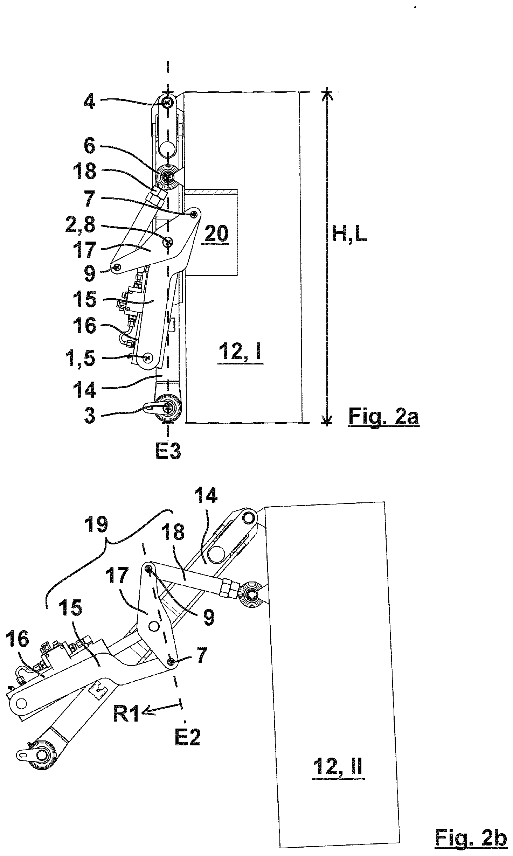

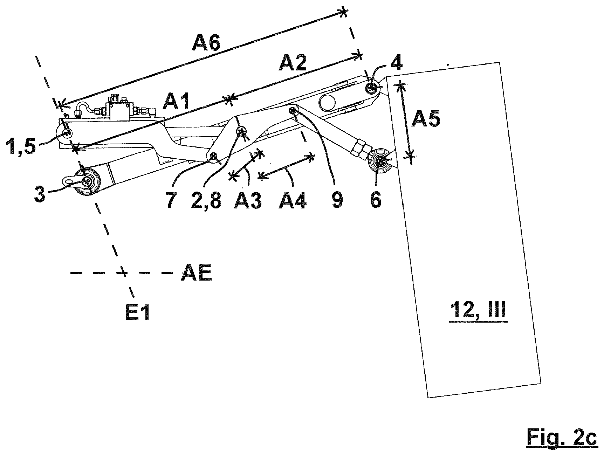

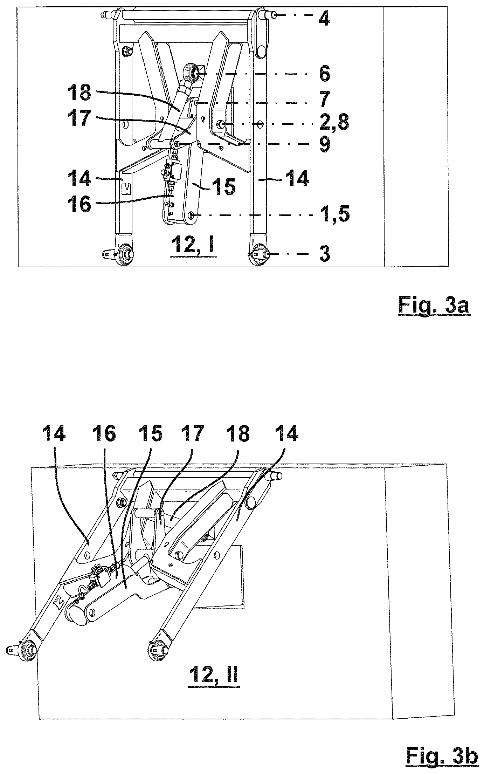

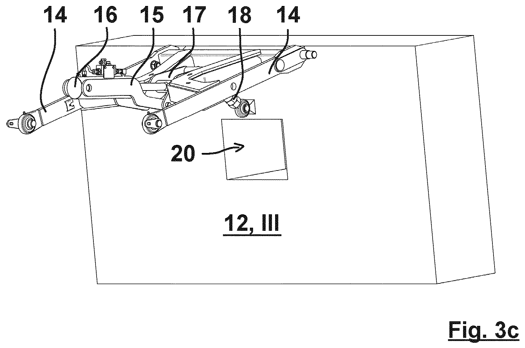

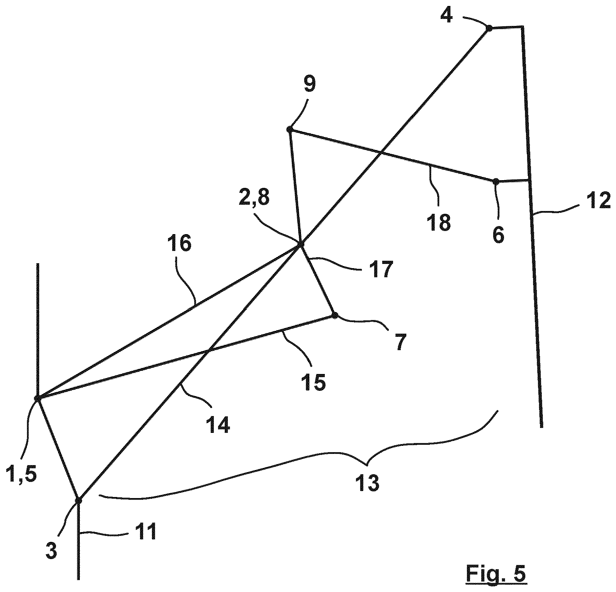

Die Ausbildung der oberhalb des in Figur 1 rechts dargestellten Rades 21 dargestellten Überführungseinrichtung 13 wird in den Figuren 2a bis 5 im Detail gezeigt. Dabei zeigen die Figuren 2a, 3a und 4a die an der Überführungseinrichtung 13 angeordnete Behältervorrichtung 12 jeweils in der Betriebsstellung I, die Figuren 2b, 3b, 4b und 5 die Behältervorrichtung 12 jeweils in einer Zwischenstellung II und die Figuren 2c, 3c und 4c die Behältervorrichtung 12 jeweils in der Befüllstellung III.

Die Überführungseinrichtung 13 weist zwei erste Lenkerelemente 14 auf, die einenends schwenkbar um eine erste Lenkerrahmenschwenkachse 3 am Pressenrahmen 11 angeordnet sind. Anderenends sind die ersten Lenkerelemente 14 schwenkbar um eine erste Lenkerbehälterschwenkachse 4 an der Behältervorrichtung 12 angeordnet. Außerdem umfasst die Überführungseinrichtung 13 eine Lenkeranordnung 19, die ein zweites Lenkerelement 15, ein Zwischenlenkerelement 17 und ein drittes Lenkerelement 18 umfasst (sh. Fig. 2b). Das zweite Lenkerelement 15 ist einenends schwenkbar um eine zweite Lenkerrahmenschwenkachse 5 am Pressenrahmen 11 angeordnet. Das zweite Lenkerelement 15 ist anderenends schwenkbar um eine erste Zwischenlenkerschwenkachse 7 an dem Zwischenlenkerelement 17 angeordnet. Das Zwischenlenkerelement 17 ist schwenkbar um eine zweite Zwischenlenkerschwenkachse 8 am ersten Lenkerelement 14 angeordnet. Das dritte Lenkerelement 18 ist einenends schwenkbar um eine dritte Zwischenlenkerschwenkachse 9 an dem Zwischenlenkerelement 17 angeordnet. Anderenends ist das dritte Lenkerelement schwenkbar um eine zweite Lenkerbehälterschwenkachse 6 an der Behältervorrichtung 12 angeordnet.

Die Überführungseinrichtung 13 weist einen als Hydraulikzylinder ausgebildeten Aktor 16 auf. Der Aktor 16 ist einenends schwenkbar um eine Aktorrahmenschwenkachse 1 am Pressenrahmen 11 angeordnet, die koaxial mit der zweiten Lenkerrahmenschwenkachse 5 angeordnet ist. Anderenends ist der Aktor 16 schwenkbar um eine Aktorlenkerschwenkachse 2 am ersten Lenkerelement 14 angeordnet, die koaxial mit der zweiten Zwischenlenkerschwenkachse 8 angeordnet ist.

Die erste Lenkerrahmenschwenkachse 3 und die zweite Lenkerrahmenschwenkachse 5 sind in einer ersten Ebene E1 angeordnet (sh. Fig. 2c). Die erste Ebene E1 ist um mehr als 65° zur Aufstandsebene AE angewinkelt, die in Figur 2c zur Verbesserung der Übersichtlichkeit zur Überführungseinrichtung 13 verschoben dargestellt ist. Zwischen der zweiten Zwischenlenkerschwenkachse 8 und der ersten Lenkerrahmenschwenkachse 3 besteht ein Abstand A1. Zwischen der zweiten Zwischenlenkerschwenkachse 8 und der ersten Lenkerbehälterschwenkachse 4 besteht ein Abstand A2. Der Abstand A1 ist größer als der Abstand A2 (sh. Fig. 2c). Zwischen der ersten Zwischenlenkerschwenkachse 7 und der zweiten Zwischenlenkerschwenkachse 8 besteht ein Abstand A3. Zwischen der zweiten Zwischenlenkerschwenkachse 8 und der dritten Zwischenlenkerschwenkachse 9 besteht ein Abstand A4. Der Abstand A3 ist kleiner als der Abstand A3 (sh. Fig. 2c). Zwischen der ersten Lenkerbehälterschwenkachse 4 und der zweiten Lenkerbehälterschwenkachse 6 besteht ein Abstand A5. Zwischen der ersten Lenkerbehälterschwenkachse 4 und der ersten Lenkerrahmenschwenkachse 3 besteht ein Abstand A6. Der Abstand A5 beträgt höchstens 30% des Abstandes A6 (sh. Fig. 2c).

Die erste Zwischenlenkerschwenkachse 7 und die dritte Zwischenlenkerschwenkachse 9 sind in einer zweiten Ebene E2 angeordnet. Die zweite Zwischenlenkerschwenkachse 8 ist zu der zweiten Ebene E2 in eine erste Richtung R1 versetzt angeordnet. Die zweite Lenkerrahmenschwenkachse 5 ist zur zweiten Ebene E2 ebenso in die erste Richtung R1 versetzt angeordnet (sh. Fig. 2b). Eine Länge L des ersten Lenkerelementes 14 gleicht einer Höhe H der Behältervorrichtung 12 in seiner Betriebsstellung I (sh. Fig. 2a). Die erste Lenkerbehälterschwenkachse 4 und die zweite Lenkerbehälterschwenkachse 6 sind in der Betriebsstellung I der Behältervorrichtung 12 in einer dritten Ebene E3 angeordnet. Die dritte Ebene E3 ist rechtwinklig zur Aufstandsebene AE angeordnet.

In der dritten Ebene E3 befinden sich in der Betriebsstellung I der Behältervorrichtung 12 ebenso die erste Lenkerrahmenschwenkachse 3 und die zweite Zwischenlenkerschwenkachse 8 (sh. Fig. 2a).

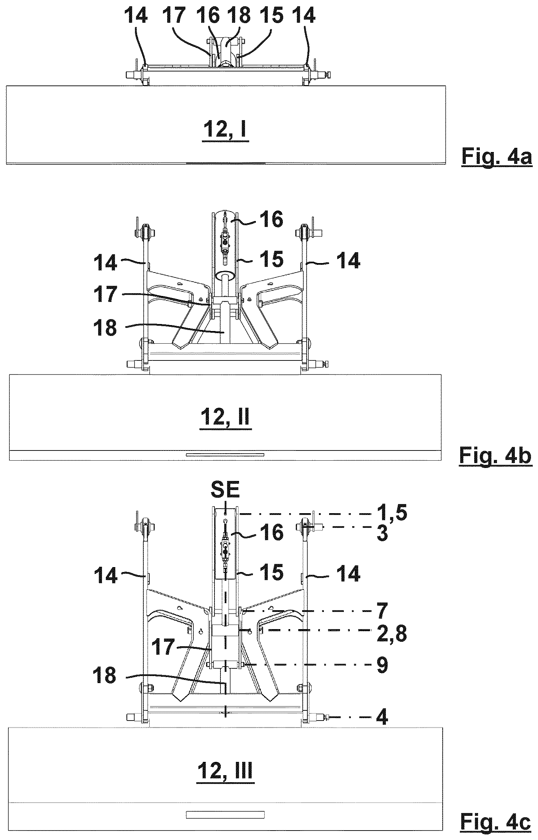

Die Behältervorrichtung 12 weist eine Ausnehmung 20 auf. Das Zwischenlenkerelement 17 ragt in der Betriebsstellung 1 der Behältervorrichtung 12 derart in die Ausnehmung 20 hinein, dass die erste Zwischenlenkerschwenkachse 7 die Behältervorrichtung 12 schneidet (sh. Fig. 1, 2a und 3c). Die Überführungseinrichtungen 13 der Ballenpresse 10 sind zueinander bezogen auf eine Längsmittelebene LMA der Ballenpresse 10 spiegelsymmetrisch angeordnet (sh. Fig. 1). Die Überführungseinrichtungen 13 sind jeweils bezogen auf eine Spiegelebene SE spiegelsymmetrisch ausgebildet (sh. Fig. 4c).

## Patentansprüche

1. Landwirtschaftliche Ballenpresse (10), aufweisend einen Pressenrahmen (11), eine Behältervorrichtung (12) und eine Überführungseinrichtung (13), die zur Überführung der Behältervorrichtung (12) relativ zum Pressenrahmen (11) von einer Betriebsstellung (I) in eine Befüllstellung (III) ausgebildet ist und zumindest einen Aktor (16), zumindest ein erstes Lenkerelement (14), das einenends schwenkbar um eine erste Lenkerrahmenschwenkachse (3) am Pressenrahmen (11) angeordnet ist und anderenends schwenkbar um eine erste Lenkerbehälterschwenkachse (4) an der Behältervorrichtung (12) angeordnet ist, und eine Lenkeranordnung (19) aufweist, die schwenkbar um eine zweite Lenkerbehälterschwenkachse (6) an der Behältervorrichtung (12) angeordnet ist und zumindest ein zweites Lenkerelement (15) umfasst, das einenends schwenkbar um eine zweite Lenkerrahmenschwenkachse (5) am Pressenrahmen (11) angeordnet ist,
**dadurch gekennzeichnet, dass** die Lenkeranordnung (19) zumindest ein Zwischenlenkerelement (17) und zumindest ein drittes Lenkerelement (18) umfasst, das zweite Lenkerelement (15) anderenends schwenkbar um eine erste Zwischenlenkerschwenkachse (7) an dem Zwischenlenkerelement (17) angeordnet ist, das Zwischenlenkerelement (17) schwenkbar um eine zweite Zwischenlenkerschwenkachse (8) am ersten Lenkerelement (14) angeordnet ist und das dritte Lenkerelement (18) einenends schwenkbar um eine dritte Zwischenlenkerschwenkachse (9) an dem Zwischenlenkerelement (17) und anderenends schwenkbar um die zweite Behälterschwenkachse (6) an der Behältervorrichtung (12) angeordnet ist.

2. Ballenpresse nach Anspruch 1, **dadurch gekennzeichnet, dass** der Aktor (16) schwenkbar um eine Aktorrahmenschwenkachse (1) am Pressenrahmen (11) angeordnet ist.

3. Ballenpresse nach einem der vorhergehenden Ansprüche, **gekennzeichnet durch** eine Ausbildung der Lenkeranordnung (19) derart, dass die Aktorrahmenschwenkachse (1) koaxial mit der zweiten Lenkerrahmenschwenkachse (5) angeordnet ist.

4. Ballenpresse nach einem der vorhergehenden Ansprüche, **gekennzeichnet durch** eine Ausbildung der Lenkeranordnung (19) derart, dass eine erste Ebene (E1), in der die erste Lenkerrahmenschwenkachse (3) und die zweite Lenkerrahmenschwenkachse (5) angeordnet sind, um mindestens 45°, bevorzugt um mindestens 55°, besonders bevorzugt um mindestens 65° zu einer Aufstandsebene (AE) angewinkelt ist.

5. Ballenpresse nach einem der vorhergehenden Ansprüche, **dadurch gekennzeichnet, dass** der Aktor (16) schwenkbar um eine Aktorlenkerschwenkachse (2) am ersten Lenkerelement (14) angeordnet ist.

6. Ballenpresse nach einem der vorhergehenden Ansprüche, **gekennzeichnet durch** eine Ausbildung der Lenkeranordnung (19) derart, dass die Aktorlenkerschwenkachse (2) koaxial mit der zweiten Zwischenlenkerschwenkachse (8) angeordnet ist.

7. Ballenpresse nach einem der vorhergehenden Ansprüche, **gekennzeichnet durch** eine Ausbildung der Lenkeranordnung (19) derart, dass ein Abstand (A1) zwischen der zweiten Zwischenlenkerschwenkachse (8) und der ersten Lenkerrahmenschwenkachse (3) größer ist als ein Abstand (A2) zwischen der zweiten Zwischenlenkerschwenkachse (8) und der ersten Lenkerbehälterschwenkachse (4).

8. Ballenpresse nach einem der vorhergehenden Ansprüche, **dadurch gekennzeichnet, dass** die Behältervorrichtung (12) eine Ausnehmung (20) aufweist, in die das Zwischenlenkerelement (17) in der Betriebsstellung (I) der Behältervorrichtung (12) derart hineinragt, dass die erste Zwischenlenkerschwenkachse (7) die Behältervorrichtung (12) schneidet.

9. Ballenpresse nach einem der vorhergehenden Ansprüche, **gekennzeichnet durch** eine Ausbildung des Zwischenlenkerelementes (17) derart, dass ein Abstand (A3) zwischen der ersten Zwischenlenkerschwenkachse (7) und der zweiten Zwischenlenkerschwenkachse (8) kleiner ist als ein Abstand (A4) zwischen der zweiten Zwischenlenkerschwenkachse (8) und der dritten Zwischenlenkerschwenkachse (9).

10. Ballenpresse nach einem der vorhergehenden Ansprüche, **gekennzeichnet durch** eine Ausbildung des Zwischenlenkerelementes (17) derart, dass die zweite Zwischenlenkerschwenkachse (8) zumindest in einer Stellung der Behältervorrichtung (12) zu einer zweiten Ebene (E2), in der die erste Zwischenlenkerschwenkachse (7) und die dritte Zwischenlenkerschwenkachse (9) angeordnet sind, in eine erste Richtung (R1) versetzt angeordnet ist, in die auch die zweite Lenkerrahmenschwenkachse (5) zu der zweiten Ebene (E2) versetzt angeordnet ist.

11. Ballenpresse nach einem der vorhergehenden Ansprüche, **gekennzeichnet durch** eine Ausbildung des ersten Lenkerelementes (14) derart, dass seine Länge (L) zumindest 80 %, bevorzugt zumindest 90 %, besonders bevorzugt zumindest 100 % einer Höhe (H) der Behältervorrichtung (12) in seiner Betriebsstellung (I) entspricht.

12. Ballenpresse nach einem der vorhergehenden Ansprüche, **gekennzeichnet durch** eine Ausbildung der Lenkeranordnung (19) derart, dass eine dritte Ebene (E3), in der die erste Lenkerbehälterschwenkachse (4) und die zweite Lenkerbehälterschwenkachse (6) in der Betriebsstellung (I) der Behältervorrichtung (12) angeordnet sind, rechtwinklig zu einer Aufstandsebene (AE) der Ballenpresse (10) angeordnet ist.

13. Ballenpresse nach einem der vorhergehenden Ansprüche, **gekennzeichnet durch** eine Ausbildung der Lenkeranordnung (19) derart, dass die erste Lenkerrahmenschwenkachse (3) und/oder die zweite Zwischenlenkerschwenkachse (8) in der Betriebsstellung (I) der Behältervorrichtung (12) in der dritten Ebene (E3) angeordnet sind/ist.

14. Ballenpresse nach einem der vorhergehenden Ansprüche, **gekennzeichnet durch** eine Ausbildung der Lenkeranordnung (19) derart, dass ein Abstand (A5) zwischen der ersten Lenkerbehälterschwenkachse (4) und der zweiten Lenkerbehälterschwenkachse (6) höchstens 50 %, bevorzugt höchstens 40 %, besonders bevorzugt höchstens 30 %, eines Abstandes (A6) zwischen der ersten Lenkerbehälterschwenkachse (4) und der ersten Lenkerrahmenschwenkachse (3) beträgt.

15. Ballenpresse nach einem der vorhergehenden Ansprüche, **gekennzeichnet durch** zwei erste Lenkerelemente (14), wobei der Aktor (16), das zweite Lenkerelement (15), das Zwischenlenkerelement (17) und/oder das dritte Lenkerelement (18) in der Betriebsstellung (I) der Behältervorrichtung (12) zumindest teilweise zwischen den ersten Lenkerelementen (14) angeordnet sind.

16. Ballenpresse nach einem der vorhergehenden Ansprüche, **dadurch gekennzeichnet, dass** das zweite Lenkerelement (15) und/oder das dritte Lenkerelement (18) einen weiteren Aktor aufweisen/aufweist.

## Claims

1. Agricultural baler (10) comprising a press frame (11), a container device (12), and a transfer means (13), which is designed to transfer the container device (12) relative to the press frame (11) from an operating position (I) into a filling position (III) and has at least one actuator (16), at least one first link element (14), one end of which is arranged on the press frame (11) so as to be pivotable about a first link-frame pivot axis (3) and the other end of which is arranged on the container device (12) so as to be pivotable about a first link-container pivot axis (4), and a link arrangement (19), which is arranged on the container device (12) so as to be pivotable about a second link-container pivot axis (6) and has at least one second link element (15), one end of which is arranged on the press frame (11) so as to be pivotable about a second link-frame pivot axis (5),
**characterized in that** the link arrangement (19) comprises at least one intermediate link element (17) and at least one third link element (18), the other end of which second link element (15) is arranged on the intermediate link element (17) so as to be pivotable about a first intermediate link pivot axis (7), the intermediate link element (17) is arranged on the first link element (14) so as to be pivotable about a second intermediate link pivot axis (8), and one end of the third link element (18) is arranged on the intermediate link element (17) so as to be pivotable about a third intermediate link pivot axis (9) and the other end is arranged on the container device (12) so as to be pivotable about the second container pivot axis (6).

2. Baler according to claim 1, **characterized in that** the actuator (16) is arranged on the press frame (11) so as to be pivotable about an actuator-frame pivot axis (1).

3. Baler according to either of the preceding claims, **characterized by** a design of the link arrangement (19) such that the actuator-frame pivot axis (1) is arranged coaxially with the second link-frame pivot axis (5).

4. Baler according to any of the preceding claims, **characterized by** a design of the link arrangement (19) such that a first plane (E1), in which the first link-frame pivot axis (3) and the second link-frame pivot axis (5) are arranged, is angled by at least 45°, preferably by at least 55°, particularly preferably by at least 65° to a contact plane (AE).

5. Baler according to any of the preceding claims, **characterized in that** the actuator (16) is arranged on the first link element (14) so as to be pivotable about an actuator-link pivot axis (2).

6. Baler according to any of the preceding claims, **characterized by** a design of the link arrangement (19) such that the actuator-link pivot axis (2) is arranged coaxially with the second intermediate link pivot axis (8).

7. Baler according to any of the preceding claims, **characterized by** a design of the link arrangement (19) such that a distance (A1) between the second intermediate link pivot axis (8) and the first link-frame pivot axis (3) is greater than a distance (A2) between the second intermediate link pivot axis (8) and the first link-container pivot axis (4).

8. Baler according to any of the preceding claims, **characterized in that** the container device (12) has a recess (20) into which the intermediate link element (17) projects in the operating position (I) of the container device (12) such that the first intermediate link pivot axis (7) intersects the container device (12).

9. Baler according to any of the preceding claims, **characterized by** a design of the intermediate link element (17) such that a distance (A3) between the first intermediate link pivot axis (7) and the second intermediate link pivot axis (8) is smaller than a distance (A4) between the second intermediate link pivot axis (8) and the third intermediate link pivot axis (9).

10. Baler according to any of the preceding claims, **characterized by** a design of the intermediate link element (17) such that the second intermediate link pivot axis (8) is arranged, at least in one position of the container device (12), offset in a first direction (R1) from a second plane (E2) in which the first intermediate link pivot axis (7) and the third intermediate link pivot axis (9) are arranged, in which direction the second link-frame pivot axis (5) is also arranged offset from the second plane (E2).

11. Baler according to any of the preceding claims, **characterized by** a design of the first link element (14) such that its length (L) corresponds to at least 80%, preferably at least 90%, particularly preferably at least 100% of a height (H) of the container device (12) in its operating position (I).

12. Baler according to any of the preceding claims, **characterized by** a design of the link arrangement (19) such that a third plane (E3), in which the first link-container pivot axis (4) and the second link-container pivot axis (6) are arranged in the operating position (I) of the container device (12), is arranged at a right angle to a contact plane (AE) of the baler (10).

13. Baler according to any of the preceding claims, **characterized by** a design of the link arrangement (19) such that the first link-frame pivot axis (3) and/or the second intermediate link pivot axis (8) are/is arranged in the third plane (E3) in the operating position (I) of the container device (12).

14. Baler according to any of the preceding claims, **characterized by** a design of the link arrangement (19) such that a distance (A5) between the first link-container pivot axis (4) and the second link-container pivot axis (6) is at most 50%, preferably at most 40%, particularly preferably at most 30%, of a distance (A6) between the first link-container pivot axis (4) and the first link-frame pivot axis (3).

15. Baler according to any of the preceding claims, **characterized by** two first link elements (14), the actuator (16), the second link element (15), the intermediate link element (17) and/or the third link element (18) being arranged at least in part between the first link elements (14) in the operating position (I) of the container device (12).

16. Baler according to any of the preceding claims, **characterized in that** the second link element (15) and/or the third link element (18) have/has a further actuator.

## Revendications

1. Presse (10) à balles agricole comportant un châssis (11) de presse, un dispositif (12) formant récipient et un dispositif (13) de transfert, qui est constitué pour le transfert du dispositif (12) formant récipient relativement au châssis (11) de presse d'une position (I) de fonctionnement à une position (III) de remplissage, et au moins un actionneur (16), au moins un premier élément (14) de bras, qui, à une extrémité, est monté pivotant sur le châssis (11) de presse autour d'un premier axe (3) de pivotement bras châssis et est monté, à l'autre extrémité, pivotant sur le dispositif (12) formant récipient autour d'un premier axe (4) de pivotement bras récipient, et un agencement (19) de bras, qui est monté pivotant sur le dispositif (12) formant récipient autour d'un deuxième axe (6) de pivotement bras récipient et comprend au moins un deuxième élément (15) de bras, qui, à une extrémité, est monté pivotant sur le châssis (11) de presse autour d'un deuxième axe (5) de pivotement bras châssis,
**caractérisée en ce que** l'agencement (19) de bras comprend au moins un élément (17) de bras intermédiaire et au moins un troisième élément (18) de bras, le deuxième élément (15) de bras est, à l'autre extrémité, monté pivotant sur l'élément (17) de bras intermédiaire autour d'un premier axe (7) de pivotement de bras intermédiaire, l'élément (17) de bras intermédiaire est monté pivotant sur le premier élément (14) de bras autour d'un deuxième axe (8) de pivotement de bras intermédiaire et le troisième élément (18) de bras est monté, à une extrémité, pivotant sur l'élément (17) de bras intermédiaire autour d'un troisième axe (9) de pivotement de bras intermédiaire et, à l'autre extrémité, pivotant sur le dispositif (12) formant récipient autour du deuxième axe (6) de pivotement de récipient.

2. Presse à balles suivant la revendication 1,
**caractérisée en ce que** l'actionneur (16) est monté pivotant sur le châssis (11) de presse autour d'un axe (1) de pivotement actionneur châssis.

3. Presse à balles suivant l'une des revendications précédentes,
**caractérisée par** une constitution de l'agencement (19) de bras de manière à ce que l'axe (1) de pivotement d'actionneur châssis soit coaxial avec le deuxième axe (5) de pivotement bras châssis.

4. Presse à balles suivant l'une des revendications précédentes,
**caractérisée par** une constitution de l'agencement (19) de bras de manière à ce qu'un premier plan (E1), dans lequel sont disposés le premier axe (3) de pivotement bras châssis et le deuxième axe (5) de pivotement bras châssis, fasse un angle d'au moins 45°, de préférence d'au moins 55°, d'une manière particulièrement préférée d'au moins 65°, avec un plan (AE) d'érection.

5. Presse à balles suivant l'une des revendications précédentes,
**caractérisée en ce que** l'actionneur (16) est monté pivotant sur le premier élément (14) de bras autour d'un axe (2) de pivotement actionneur bras.

6. Presse à balles suivant l'une des revendications précédentes,
**caractérisée par** une constitution de l'agencement (19) de bras de manière à ce que l'axe (2) de pivotement actionneur bras soit coaxial avec le deuxième axe (8) de pivotement de bras intermédiaire.

7. Presse à balles suivant l'une des revendications précédentes,
**caractérisée par** une constitution de l'agencement (19) de bras de manière à ce qu'une distance (A1) entre le deuxième axe (8) de pivotement de bras intermédiaire et le premier axe (3) de pivotement de bras châssis soit plus grande qu'une distance (A2) entre le deuxième axe (8) de pivotement de bras intermédiaire et le premier axe (4) de pivotement de bras récipient.

8. Presse à balles suivant l'une des revendications précédentes,
**caractérisée en ce que** le dispositif (12) formant récipient a un évidement (20), dans lequel l'élément (17) de bras intermédiaire pénètre dans la position (I) de fonctionnement du dispositif (12) formant récipient de manière à ce que le premier axe (7) de pivotement de bras intermédiaire coupe le dispositif (12) formant récipient.

9. Presse à balles suivant l'une des revendications précédentes,
**caractérisée par** une constitution de l'élément (17) de bras intermédiaire de manière à ce qu'une distance (A3) entre le premier axe (7) de pivotement de bras intermédiaire et le deuxième axe (8) de pivotement de bras intermédiaire soit plus petite qu'une distance (A4) entre le deuxième axe (8) de pivotement de bras intermédiaire et le troisième axe (9) de pivotement de bras intermédiaire.

10. Presse à balles suivant l'une des revendications précédentes,
**caractérisée par** une constitution de l'élément (17) de bras intermédiaire de manière à ce que le deuxième axe (8) de pivotement de bras intermédiaire soit, au moins dans une position du dispositif (12) formant récipient par rapport à un deuxième plan (E2), dans lequel se trouve le premier axe (7) de pivotement de bras intermédiaire et le troisième axe (9) de pivotement de bras intermédiaire, décalé dans une première direction (R1), dans laquelle le deuxième axe (5) de pivotement de bras châssis est également décalé par rapport au deuxième plan (E2).

11. Presse à balles suivant l'une des revendications précédentes,
**caractérisée par** une constitution du premier élément (14) de bras de manière à ce que sa longueur (L) corresponde à au moins 80%, de préférence à au moins 90%, de préférence à au moins 100%, d'une hauteur (H) du dispositif (12) formant récipient dans sa position (I) de fonctionnement.

12. Presse à balles suivant l'une des revendications précédentes,
**caractérisée par** une constitution de l'agencement (19) de bras de manière à ce qu'un troisième plan (E3), dans lequel le premier axe (4) de pivotement de bras récipient et le deuxième axe (6) de pivotement de bras récipient sont disposés dans la position (I) de fonctionnement du dispositif (12) formant récipient, soit à angle droit avec un plan (AE) d'érection de la presse (10) à balles.

13. Presse à balles suivant l'une des revendications précédentes,
**caractérisée par** une constitution de l'agencement (19) de bras de manière à ce que le premier axe (3) de pivotement bras châssis et/ou le deuxième axe (8) de pivotement de bras intermédiaire soient/soit dans la position (I) de fonctionnement du dispositif (12) formant récipient dans le troisième plan (E3).

14. Presse à balles suivant l'une des revendications précédentes,
**caractérisée par** une constitution de l'agencement (19) de bras de manière à ce qu'une distance (A5) entre le premier axe (4) de pivotement de bras récipient et le deuxième axe (6) de pivotement de bras récipient représente au plus 50%, de préférence au plus 40%, d'une manière particulièrement préférée au plus 30%, d'une distance (A6) entre le premier axe (4) de pivotement de bras récipient et le premier axe (3) de pivotement bras châssis.

15. Presse à balles suivant l'une des revendications précédentes,
**caractérisée par** deux premiers éléments (14) de bras, dans lequel l'actionneur (16), le deuxième élément (15) de bras, l'élément (17) de bras intermédiaire et/ou le troisième élément (18) de bras sont, dans la position (I) de fonctionnement du dispositif (12) formant récipient, au moins en partie entre les premiers éléments (14) de bras.

16. Presse à balles suivant l'une des revendications précédentes,
**caractérisée en ce que** le deuxième élément (15) de bras et/ou le troisième élément (18) de bras ont/a un autre actionneur.
